# EUROPÄISCHE PATENTSCHRIFT

(11) **EP 2 137 018 B1**
(45) Veröffentlichungstag und Bekanntmachung des Hinweises auf die Patenterteilung: **16.06.2010**
(21) Anmeldenummer: 08707630.3
(22) Anmeldetag: 08.02.2008
(51) Int. Cl.: B60J 5/06, F16G 13/16

(54) **SCHIEBETÜRE FÜR EIN KRAFTFAHRZEUG**
SLIDING DOOR FOR A MOTOR VEHICLE
PORTE COULISSANTE POUR UN VÉHICULE À MOTEUR

(30) Priorität: 08.02.2007 DE 102007006357
(43) Veröffentlichungstag der Anmeldung: 30.12.2009
(73) Patentinhaber: DURA Automotive Body & Glass Systems GmbH, 58840 Plettenberg (DE)
(72) Erfinder: HEUEL, Gerhard, 57462 Olpe (DE); ERNST, Markus, 57413 Finnentrop (DE); ROTTMANN, Ralf, 57489 Drolshagen (DE)
(74) Vertreter: Zinnecker, Armin
(86) Internationale Anmeldenummer: PCT/EP2008/000985
(87) Internationale Veröffentlichungsnummer: WO 2008/095727

(56) Entgegenhaltungen:
- JP-A- 2002 019 546
- JP-A- 2007 176 235

## Beschreibung

Die Erfindung betrifft eine Schiebetüre für ein Fahrzeug, insbesondere für ein Kraftfahrzeug, nach dem Oberbegriff des Anspruchs 1. Die Schiebetüre weist an ihrer Innenseite eine Führungsschiene auf, die in einem Gleitschlitten längsverschieblich gelagert ist. Die Führungssschiene kann durch einen Motor antreibbar sein. Es ist allerdings auch möglich, daß die Führungsschiene von Hand antreibbar ist. Ferner kann die Führungsschiene wahlweise von Hand oder durch einen Motor antreibbar sein. Wenn ein Motor zum Antrieb der Führungsschiene vorhanden ist, kann es sich um einen Elektromotor und/oder einen Getriebemotor handeln. Der Motor ist vorzugsweise an dem Gleitschlitten vorgesehen. Durch den Motor kann die Führungsschiene relativ zum Gleitschlitten angetrieben werden.

An dem Fahrzeug ist ein Scharnierbügel um eine erste Achse schwenkbar gelagert. Der Scharnierbügel ist an dem Gleitschlitten um eine zweite Achse schwenkbar gelagert.

Eine Schiebetüre nach dem Oberbegriff des Anspruchs 1 ist aus der EP 1 721 768 A1 bekannt.

Aus der DE 37 03 127 C2 ist ein Kraftfahrzeug mit einer Vielzahl von zu verkabelnden Einbauten bekannt, bei dem zumindest ein Teil der Einbauten auf einem drehbaren Karussel angeordnet ist, wobei das Karussel aus einer oberen und einer unteren Platte besteht, die durch eine hohle Achse miteinander verbunden sind.

Die DE 100 17 046 C1 offenbart eine Sonnenblende für Fahrzeuge, die eine Leitung zur Stromversorgung aufweist, wobei die Leitung durch eine hohle Achse geführt wird. JP 2002 019546 offenbart eine Schiebetürekabeldurchführung mit konventionellem flexiblen Schlauch.

Aufgabe der Erfindung ist es, eine verbesserte Schiebetüre für ein Fahrzeug vorzuschlagen.

Erfindungsgemäß wird diese Aufgabe durch die kennzeichnenden Merkmale des Anspruchs 1 gelöst. Die Achsen sind zur Aufnahme einer zur Schiebetüre führenden Leitung hohl. Zu der Schiebetüre können eine oder mehrere Leitungen gleicher und/oder verschiedener Art führen. Insbesondere kann es sich um elektrische Leitungen handeln. Die Leitungen können insbesondere zu einem Fensterheber, einem Türschloß und/oder einer oder mehreren Außenbeleuchtungen in der Schiebetüre führen. Zu der Schiebetüre und/oder zu dem Motor zum Antrieb der Führungsschiene können Signalleitungen und/oder Energieversorgungsleitungen, insbesondere Stromleitungen, führen. Die Leitung oder die Leitungen können von den Hohlräumen in den Achsen des Scharnierbügels aufgenommen werden. Dadurch, daß die Leitung oder die Leitungen in den Achsen geführt sind, werden sie nicht mit einem geringen Biegeradius gebogen, wodurch sie nur einer geringen mechanischen Belastung ausgesetzt werden.

Vorteilhafte Weiterbildungen sind in den Unteransprüchen beschrieben.

Eine vorteilhafte Weiterbildung ist **dadurch gekennzeichnet, daß** die Führungsschiene durch einen Motor antreibbar ist.

Vorteilhaft ist es, wenn eine oder beide Achse Öffnungen zum Durchtritt der Leitung oder der Leitungen aufweisen.

Nach einer weiteren vorteilhaften Weiterbildung weist der Scharnierbügel eine Freimachung zur Aufnahme der Leitung oder der Leitungen auf.

Vorzugsweise ist durch den Motor ein Zahnrad antreibbar. Das Zahnrad greift vorzugsweise in eine an der Schiebetüre vorgesehene Zahnstange ein. Nach einer weiteren vorteilhaften Weiterbildung greift das Zahnrad in ein weiteres Zahnrad ein, das in eine weitere Zahnstange eingreift. Das weitere Zahnrad hat vorzugsweise den gleichen Durchmesser und die gleiche Zähnezahl wie das durch den Motor antreibbare Zahnrad. Die weitere Zahnstange ist vorzugsweise beabstandet von und parallel zu der ersten Zahnstange.

Vorteilhaft ist es, wenn ein Motor zum Antrieb des Scharnierbügels vorgesehen ist. Der Motor ist vorzugsweise an dem Fahrzeug bzw. Kraftfahrzeug vorgesehen. Es kann sich um einen Elektromotor und/oder um einen Getriebemotor handeln. Durch den Motor kann der Scharnierbügel verschwenkt werden.

Vorzugsweise ist durch den Motor ein Zahnrad antreibbar. Das Zahnrad greift vorzugsweise in ein an dem Schwenkarm vorgesehenes Zahnrad ein.

Eine weitere vorteilhafte Weiterbildung ist **dadurch gekennzeichnet, daß** die Schiebetüre an dem dem Scharnierbügel abgewandten Ende an dem Fahrzeug arretierbar ist. Vorzugsweise ist die Schiebetüre in der Weise arretierbar, daß an der Arretierungsstelle bei einer Verschwenkung des Scharnierbügels ein Längenausgleich und eine Drehbarkeit ermöglicht werden.

Dies ist vorzugsweise dadurch erreichbar, daß an dem Fahrzeug ein Scharnierbolzen für eine Scharnierkulisse an der Schiebetüre vorgesehen ist. Die Anordnung kann auch in umgekehrter Weise getroffen sein: Dann ist der Scharnierbolzen an der Schiebetüre vorgesehen, und die Scharnierkulisse ist an dem Fahrzeug vorgesehen. Vorzugsweise handelt es sich um eine offene Scharnierkulisse, in die der Scharnierbolzen eindringen kann und die der Scharnierbolzen verlassen kann. Besonders geeignet sind U-förmige Scharnierkulissen. Der Scharnierbolzen und die Scharnierkulisse sind vorzugsweise derart angeordnet und aufeinander abgestimmt, daß sie die Schiebetüre in die Schließstellung führen.

Die Erfindung betrifft ferner ein Fahrzeug, insbesondere ein Kraftfahrzeug, das durch eine erfindungsgemäße Schiebetüre gekennzeichnet ist.

Ein Ausführungsbeispiel der Erfindung wird nachstehend anhand der beigefügten Zeichnung im einzelnen erläutert. In der Zeichnung zeigt
- Fig. 1: einen Teil einer Karosserie eines Kraftfahrzeugs mit einer teilweise geöffneten Schiebetüre in einer Seitenansicht,
- Fig. 2: die Karosserie gemäß Fig. 1 in einer Ansicht von oben,
- Fig. 3: die Schiebetüre gemäß Fig. 1 und 2 im geöffneten Zustand in einer Seitenansicht,
- Fig. 4: die Schiebetüre gemäß Fig. 3 in einer Ansicht von oben,
- Fig. 5: den Scharnierbügel und die diesem zugeordneten Bauteile in einer perspektivischen Ansicht,
- Fig. 6: die Bauteile gemäß Fig. 5, allerdings ohne einige Karosseriebauteile,
- Fig. 7: den Gleitschlitten und die ihm zugeordneten Bauteile in einer perspektivischen Ansicht,
- Fig. 8: die Bauteile gemäß Fig. 7, allerdings ohne einige Teile des Gleitschlittens,
- Fig. 9: die Führungsschiene, den Gleitschlitten, den Scharnierbügel und das Winkelblech in einer Seitenansicht,
- Fig. 10: einen Längsschnitt durch Fig. 9 bei geschlossener Schiebetüre und
- Fig. 11: einen Längsschnitt durch Fig. 9 bei geöffneter Schiebetüre.

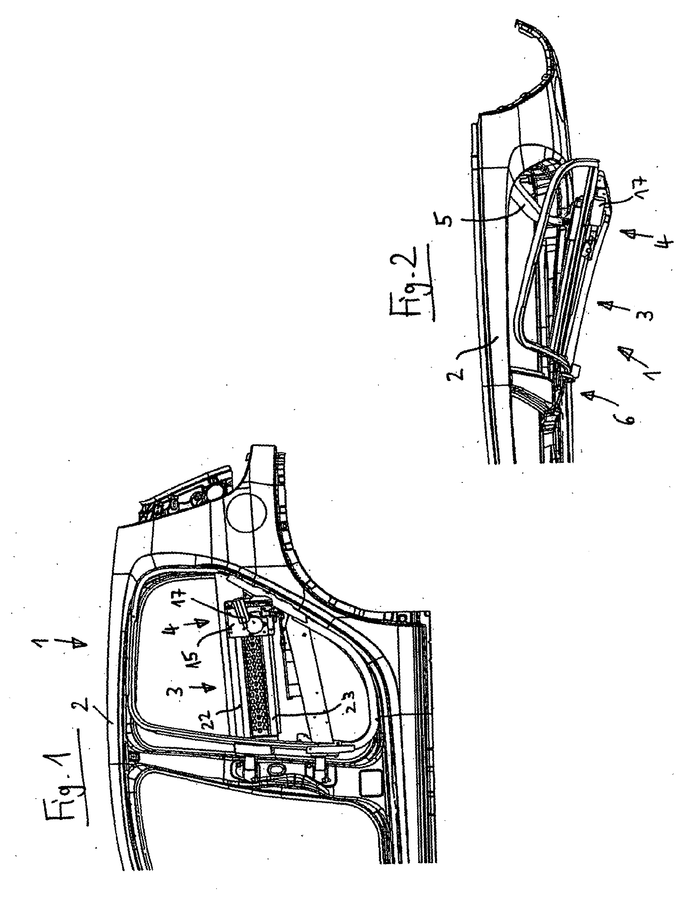

In Fig. 1 und 2 ist eine Schiebetüre 1 gezeigt, die gegenüber der Karosserie 2 eines Kraftfahrzeugs teilweise geöffnet ist. Die Schiebetüre 1 weist an ihrer Innenseite eine Führungsschiene 3 auf, die in einem Gleitschlitten 4 längsverschieblich gelagert ist.

An der Karosserie 2 ist ein Scharnierbügel 5 schwenkbar gelagert. Am anderen Ende des Scharnierbügels 5 ist der Gleitschlitten 4 schwenkbar gelagert.

Beim Öffnen der Schiebetüre 1 wird diese zunächst aus der geschlossenen Stellung (in der Zeichnung nicht dargestellt) in die teilweise geöffnete Stellung, die in Fig. 1 und 2 gezeigt ist, verschwenkt. Dies geschieht durch eine Verschwenkung des Scharnierbügels 5. Um diese Schwenkbewegung zu ermöglichen, ist an dem dem Scharnierbügel 5 gegenüberliegenden Ende der Schiebetüre 1, im dargestellten Ausführungsbeispiel also am vorderen Ende der Schiebetüre 1, eine U-förmige Scharnierkulisse 6 vorgesehen. Die U-förmige Scharnierkulisse 6 verläuft im wesentlichen parallel zur Fahrzeug-Längsrichtung. Sie ist an ihrem dem Scharnierbügel 5 abgewandten, im Ausführungsbeispiel also vorderen Ende offen. In die U-förmige Scharnierkulisse 6 greift ein Scharnierbolzen 7 ein, der im wesentlichen vertikal nach oben ragt. Durch den Scharnierbolzen 7 und die Scharnierkulisse 6 ist die Schiebetüre 7 an dem dem Scharnierbügel 5 abgewandten Ende an dem Fahrzeug arretierbar.

Wenn die Schiebetüre 1 vollständig geschlossen ist, liegt der Scharnierbolzen 7 innerhalb der U-förmigen Scharnierkulisse 6, und zwar im Abstand von deren Ende. Während der durch eine Verschwenkung des Scharnierbügels 5 erzeugten Öffnungsbewegung führt die Schiebetüre 1 eine Verschwenkung um den Scharnierbolzen 7 aus. Dabei gleitet die U-förmige Scharnierkulisse 6 relativ zum Scharnierbolzen 7 von diesem weg. In der in Fig. 1 und 2 gezeigten Stellung der Schiebetüre 1, in der die Schiebetüre 1 angestellt ist, befindet sich der Scharnierbolzen 7 am offenen Ende der U-förmigen Scharnierkulisse 6.

Bei der Schließbewegung wird die Schiebetüre 1 derart positioniert, daß das offene Ende der U-förmigen Scharnierkulisse 6 den Scharnierbolzen 7 aufnimmt. Hierdurch wird die Schließbewegung der Schiebetüre 1 bis zur vollständig geschlossenen Stellung ermöglicht.

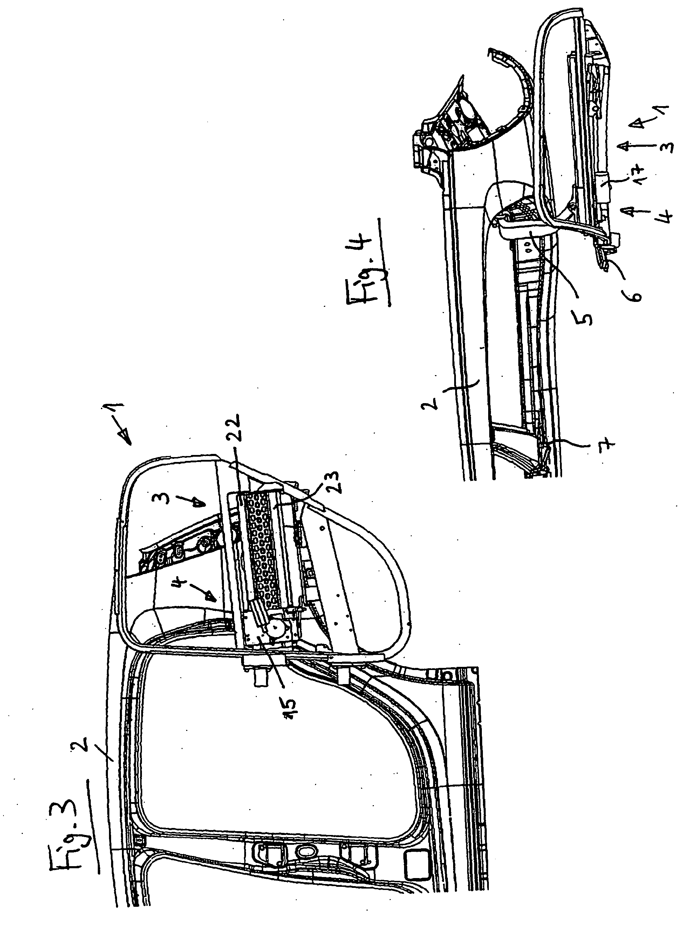

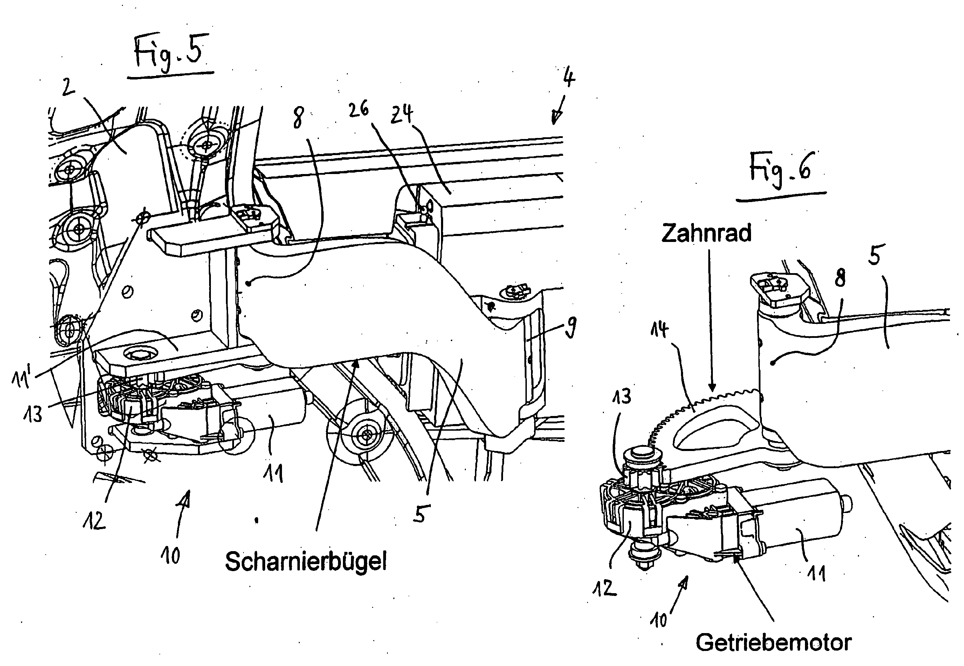

In Fig. 5 und 6 sind der Scharnierbügel 5 und die ihn umgebenden Teile vergrößert dargestellt. Der Scharnierbügel 5 ist an einem Teil der Karosserie 2 um eine im wesentlich vertikal verlaufende Achse 8 schwenkbar gelagert. Er ist an seinem anderen Ende um eine ebenfalls im wesentlichen vertikal verlaufende Achse 9 an dem Gleitschlitten 4 schwenkbar gelagert. Der Scharnierbügel 5 umfaßt ein Mitteilteil, das in der Ansicht von oben (Fig. 2 und 4) im wesentlichen gerade bzw. eben verläuft, das allerdings, wie insbesondere aus Fig. 5 ersichtlich, in der Richtung von der Karosserie 2 zum Gleitschlitten 4 schräg nach unten verläuft. Von dem Mittelteil des Scharnierbügels 5 knicken zwei Endteile, an deren Enden sich die Achsen 8, 9 befinden, in der Ansicht von oben (Fig. 2 und 4) ab, wobei das der Achse 8 zugewandte Ende um einen Winkel von etwa 90° abknickt und das der Achse 9 zugewandte Ende um einen Winkel von etwa 45° abknickt, so daß die Endteile in einem Winkel von etwa 135° zueinander stehen.

Zum Schwenkantrieb des Scharnierbügels 5 dient ein Getriebemotor 10, der an einem Winkelblech 11' an der C-Säule der Karosserie 2 befestigt ist. Der Getriebemotor 10 umfaßt einen Elektromotor 11, der ein Getriebe 12 antreibt, dessen vertikal verlaufende Ausgangswelle ein Zahnrad 13 trägt, das durch den Getriebemotor 10 antreibbar ist.

In Fig. 6 ist gegenüber der Darstellung in Fig. 5 das Winkelblech 11' weggelassen. Wie aus Fig. 6 ersichtlich, greift das Zahnrad 13 in ein Zahnrad 14 ein, das an dem Schwenkarm 5 vorgesehen ist. Das Zahnrad 14 ist um die Achse 8 schwenkbar gelagert. Es ist drehfest mit dem Schwenkarm 5 verbunden. Da der Schwenkarm 5 nur eine Drehung um etwa 90° ausführen muß, erstreckt sich auch das Zahnrad 14 nur über einen Winkelbereich von im wesentlichen 90°.

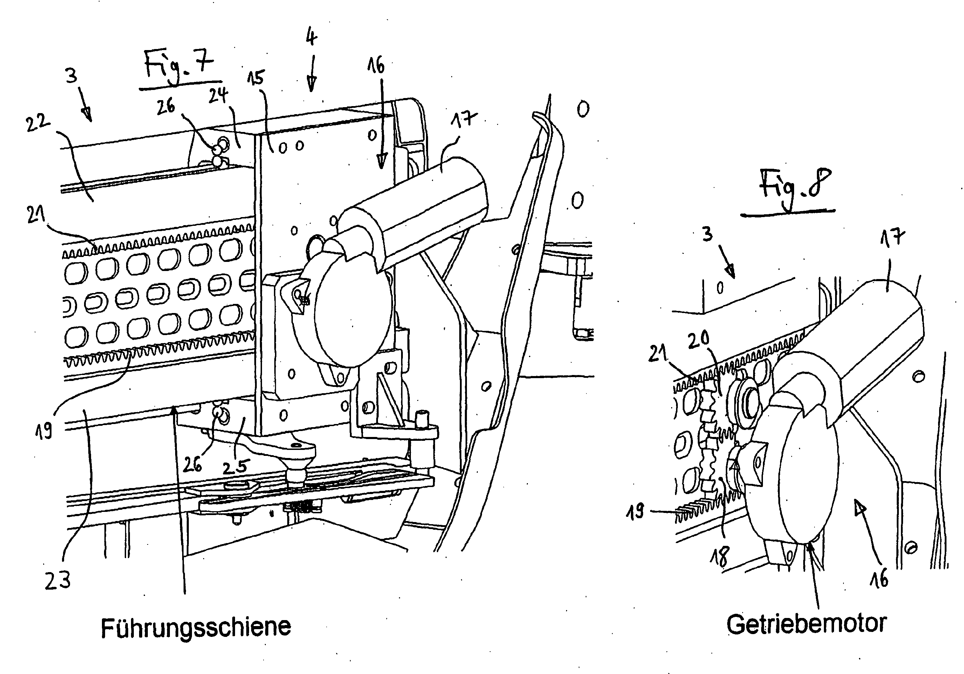

Wie aus Fig. 7 ersichtlich, ist an einer im wesentlichen vertikal verlaufenden Verbindungsplatte 15 des Gleitschlittens 4 ein Getriebemotor 16 befestigt, der zum Antrieb der Führungsschiene 3 dient. Der Getriebemotor 16 umfaßt einen Elektromotor 17, dessen im wesentlichen horizontal und parallel zur Führungsschiene 3 verlaufende Ausgangswelle ein Schneckenrad trägt, das ein Zahnrad antreibt, dessen Drehachse im wesentlichen horizontal und quer zur Führungsschiene 3 verläuft.

Dieses Zahnrad ist mit einem Zahnrad 18 verbunden, das in Fig. 8 zu sehen ist, da dort die Verbindungsplatte 15 des Gleitschlittens 4 weggelassen wurde. Das Zahnrad 18 greift in eine Zahnstange 19 ein, die an der Schiebetüre 1 vorgesehen ist. Die Zahnstange 19 verläuft parallel zu der Führungsschiene 3.

Das von dem Getriebemotor 16 angetriebene Zahnrad 18 greift ferner in ein weiteres Zahnrad 20 ein, das seinerseits in eine weitere Zahnstange 21 eingreift. Das angetriebene Zahnrad 20 hat denselben Durchmesser und dieselbe Zähnezahl wie das antreibende Zahnrad 18. Es ist an dem Gleitschlitten 4 um eine Achse drehbar gelagert, die zur Achse des antreibenden Zahnrads 18 parallel und von dieser beabstandet ist. Die weitere Zahnstange 21 verläuft parallel zu und im Abstand von der ersten Zahnstange 19. Die von dem Getriebemotor 16 in das antreibende Zahnrad 18 eingeleitete Drehbewegung versetzt das angetriebene Zahnrad 20 in eine gegenläufige Drehbewegung. Die gegenläufigen Drehungen der Zahnräder 18, 20 bewirken durch die Abstützung an den Zahnstangen 19, 21 eine lineare Bewegung der Führungsschiene 3 gegenüber dem Gleitschlitten 4.

Wie aus Fig. 7 ersichtlich, umfaßt die Führungsschiene 3 eine obere Führungsleiste 22 und eine untere Führungsleiste 23, deren äußere Enden von Führungsblöcken 24, 25 des Gleitschlittens 4 übergriffen werden. Die Gleitführung der Führungsleisten 22, 23 in den Führungsblöcken 24, 25 erfolgt durch Wälzlager 26.

Durch die Erfindung wird ein elektromechanisches Antriebssystem für eine Schiebetüre eines Fahrzeugs, insbesondere eines Kraftfahrzeugs, geschaffen, die zwei Antriebseinheiten umfassen kann, die jeweils unterschiedliche Funktionen übernehmen. Eine erste Antriebseinheit wird von dem Getriebemotor 10 und den diesem zugeordneten Bauteilen realisiert. Diese Antriebseinheit übernimmt die erste Öffnungsbewegung der Schiebetüre 1, also das "Anstellen" der Schiebetüre 1, wie beispielsweise in Fig. 1 und 2 gezeigt. Eine zweite Antriebseinheit wird von dem Getriebemotor 16 und den ihm zugeordneten Bauteilen gebildet. Diese Antriebseinheit übernimmt die "Linearbewegung" der Schiebetüre 2 bis zur vollständig geöffneten Stellung, die in Fig. 3 und 4 gezeigt ist, und wieder zurück. Die erste Antriebseinheit und die zweite Antriebseinheit können elektromechanisch derart miteinander verbunden werden, daß sich hieraus eine Öffnungsbewegung und die entgegengesetzte Schließbewegung ergibt.

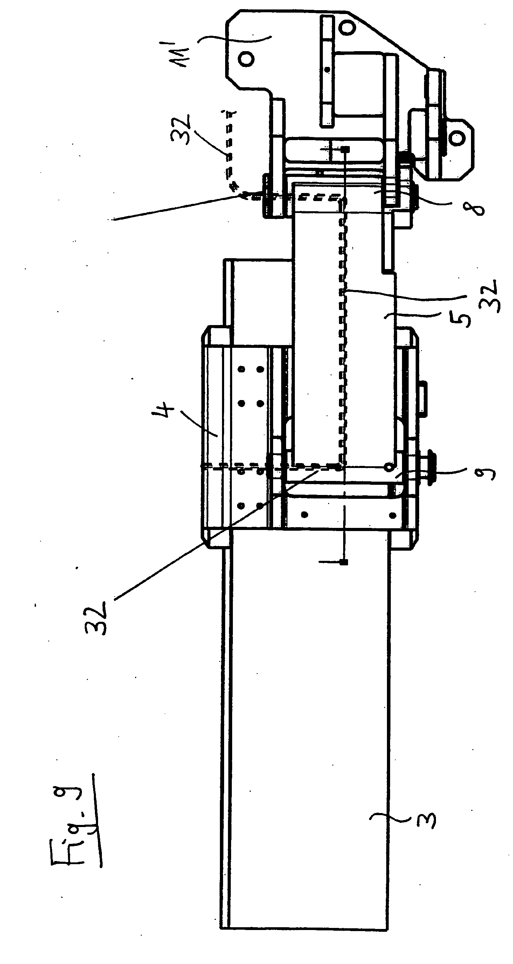

In Fig. 9, 10 und 11 sind die Führungsschiene 3, der Gleitschlitten 4, der Scharnierbügel 5, das Winkelblech 11' und weitere Bauteile dargestellt, wobei es sich allerdings nicht wie in Fig. 1 bis 8 um eine linke hintere Schiebetüre eines Kraftfahrzeugs handelt, sondern um eine rechte hintere Schiebetüre des Kraftfahrzeugs. Gleiche Teile sind mit gleichen Bezugszeichen versehen, so daß sie nicht erneut beschrieben werden müssen.

Die Achse 8, um die der Scharnierbügel 5 in dem Winkelblech 11' schwenkbar gelagert ist, ist hohl. Sie weist einen zentralen Hohlraum 27 auf.

In entsprechender Weise ist die Achse 9, um die der Scharnierbügel 5 in dem Gleitschlitten 4 schwenbar gelagert ist, hohl. Sie weist einen zentralen Hohlraum 28 auf.

Die Achse 8 weist eine Öffnung 29 auf, die zum Scharnierbügel 5 hin gerichtet ist. In entsprechender Weise weist die Achse 9 eine Öffnung 30 auf, die zum Scharnierbügel 5 hin gerichtet ist. Die Öffnungen 29, 30 sind einander zugewandt. Sie weisen jeweils in die Längsrichtung des Scharnierbügels 5. Die Achsen 8, 9 sind mit dem Scharnierbügel 5 drehfest verbunden, ändern also ihre Drehstellung relativ zum Scharnierbügel 5 bei einer Verschwenkung dieses Scharnierbügels 5 nicht.

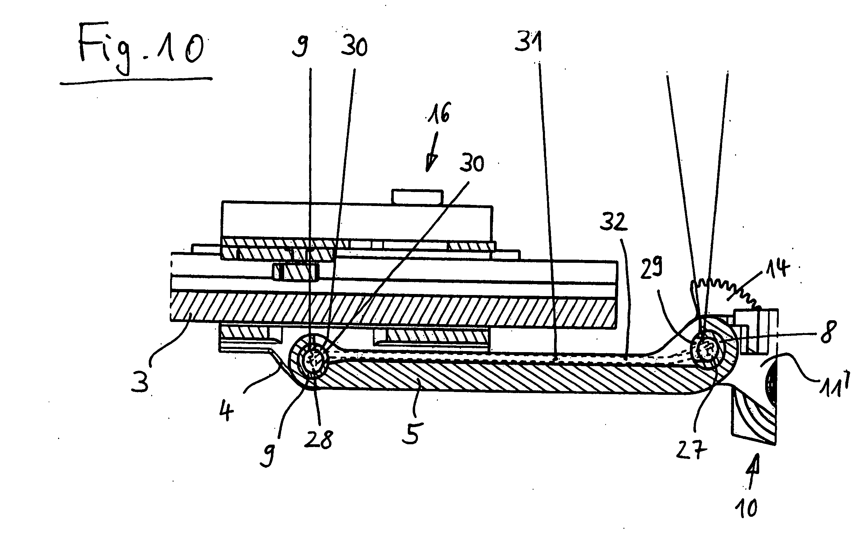

Der Scharnierbügel 5 weist eine Freimachung 31 auf. Die Freimachung 31 befindet sich an der Innenseite des Scharnierbügels 5, also an derjenigen Seite, die dem Gleitschlitten 4 zugewandt ist, wenn sich die Schiebetüre in der geschlossenen Stellung befindet, wie in Fig. 10 gezeigt. Die Freimachung 31 verläuft in Längsrichtung des Scharnierbügels 5. Sie befindet sich in der Höhe, in der auch die Öffnungen 29, 30 liegen. Die Freimachung 31 ist als offene Vertiefung ausgebildet. Sie könnte allerdings auch verschließbar sein, beispielsweise durch einen Deckel, der einclipsbar sein kann (in der Zeichnung nicht dargestellt).

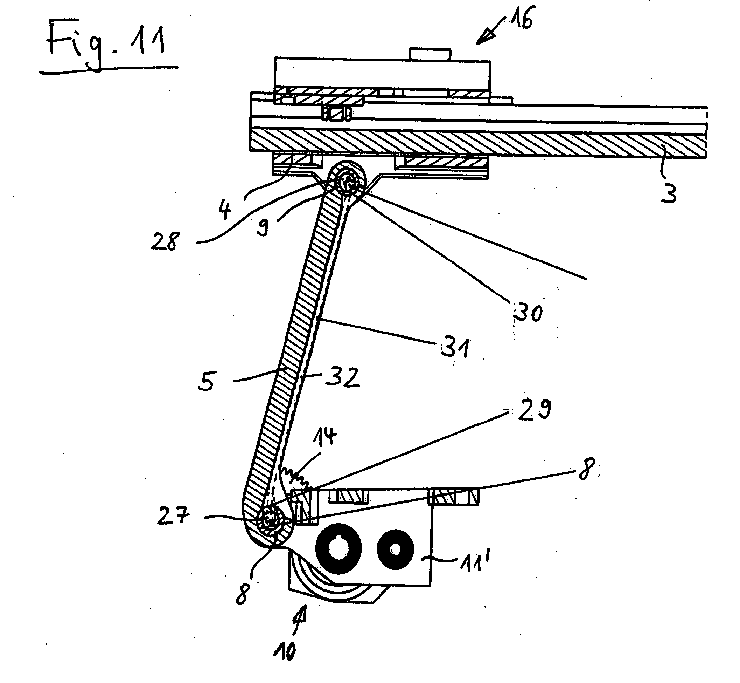

Die zum Getriebemotor 16 bzw. zum Elektromotor 17 führenden Leitungen 32 werden durch die hohlen Achsen 8, 9 geführt. Sie werden ferner durch die Öffnungen 29, 30 und durch die Freimachung 31 geführt. Die Leitungen 32 verlaufen durch das obere offene Ende der Achse 8, den zentralen Hohlraum 27, die Öffnung 29, die Freimachung 31, die Öffnung 30, den Hohlraum 28 und das obere offene Ende der Achse 9 zum Elektromotor 17 des Getriebemotors 16 an dem Gleitschlitten 4. Sie werden bei der Bewegung des Scharnierarms 5 von der geschlossenen Stellung gemäß Fig. 10 in die geöffnete Stellung gemäß Fig. 11 nur gering mechanisch belastet. Sie werden in den zentralen Hohlräumen 27, 28 der Achsen 8, 9 geführt. Ferner werden sie durch die Öffnungen 29, 30 geführt, die ihre Lage relativ zum Scharnierbügel 5 bei einer Verschwenkung dieses Scharnierbügels 5 nicht ändern.

Durch die Erfindung wird eine Leitungsführung durch den beweglichen Scharnierbügel 5 an einer Schiebetüre mit innenliegender Linearantriebseinheit mit geringer mechanischer Belastung der Leitungen bzw. Leiter realisiert. Es erfolgt keine Biegung der Leitungen bzw. Leiter mit einem geringen Biegeradius. Die Erfindung ermöglicht eine Leitungsführung, die nur eine geringe mechanische Belastung für die Signal- und/oder Energieversorgungsleitungen mit sich bringt. Die Leitungen werden durch diese Leitungsführung nicht in axialer Richtung bei einer sich bewegenden Schiebetüre gebogen. Es entsteht ausschließlich eine torsionsbehaftete Bewegung für die Leitungen. Die Leitungsführung erfolgt durch die hohlen Mittelachsen und die Öffnungen zwischen den Achsen und dem Scharnierbügel. Die Freimachung im Scharnierbügel verbessert die Leitungsführung.

## Patentansprüche

1. Schiebetüre für ein Fahrzeug, die an ihrer Innenseite eine Führungsschiene (3) aufweist, die in einem Gleitschlitten (4) längsverschieblich gelagert ist,
wobei an dem Fahrzeug ein Scharnierbügel (5) um eine Achse (8) schwenkbar gelagert ist und der Scharnierbügel (5) an dem Gleitschlitten (4) um eine zweite Achse (9) schwenkbar gelagert ist,
**dadurch gekennzeichnet,**
**daß** die Achsen (8, 9) zur Aufnahme einer zur Schiebetüre führenden Leitung (32) hohl (27, 28) sind.

2. Schiebetüre nach Anspruch 1, **dadurch gekennzeichnet, daß** die Führungsschiene (3) durch einen Motor (16) antreibbar ist.

3. Schiebetüre nach Anspruch 1 oder 2, **dadurch gekennzeichnet, daß** eine oder beide Achsen (8, 9) Öffnungen (29, 30) zum Durchtritt der Leitung (32) aufweisen.

4. Schiebetüre nach einem der vorhergehenden Ansprüche, **dadurch gekennzeichnet, daß** der Scharnierbügel (5) eine Freimachung (31) zur Aufnahme der Leitung (32) aufweist.

5. Schiebetüre nach einem der Ansprüche 2 bis 4, **dadurch gekennzeichnet, daß** durch den Motor (16) ein Zahnrad (18) antreibbar ist.

6. Schiebetüre nach Anspruch 5, **dadurch gekennzeichnet, daß** das Zahnrad (18) in eine an der Schiebetüre (1) vorgesehene Zahnstange (19) eingreift.

7. Schiebetüre nach Anspruch 5 oder 6, **dadurch gekennzeichnet, daß** das Zahnrad (18) in ein weiteres Zahnrad (20) eingreift, das in eine weitere Zahnstange (21) eingreift.

8. Schiebetüre nach einem der vorhergehenden Ansprüche, **gekennzeichnet durch** einen Motor (10) zum Antrieb des Scharnierbügels (5).

9. Schiebetüre nach Anspruch 8, **dadurch gekennzeichnet, daß** durch den Motor (10) ein Zahnrad (13) antreibbar ist.

10. Schiebetüre nach Anspruch 9, **dadurch gekennzeichnet, daß** das Zahnrad in ein an dem Schwenkarm (5) vorgesehenes Zahnrad (14) eingreift.

11. Schiebetüre nach einem der vorhergehenden Ansprüche, **dadurch gekennzeichnet, daß** die Schiebetüre (1) an dem dem Scharnierbügel (5) abgewandten Ende an dem Fahrzeug arretierbar ist.

12. Fahrzeug, insbesondere Kraftfahrzeug, **gekennzeichnet durch** eine Schiebetüre (1) nach einem der Ansprüche 1 bis 11.

## Claims

1. Sliding door for a vehicle, the inside of which sliding door has a guide rail (3) which is mounted in a longitudinally displaceable manner in a sliding carriage (4), wherein a hinge bracket (5) is mounted on the vehicle such that it can pivot about a pin (8) and the hinge bracket (5) is mounted on the sliding carriage (4) such that it can be pivoted about a second pin (9), **characterized in that** the pins (8, 9) are hollow (27, 28) in order to receive a line (32) leading to the sliding door.

2. Sliding door according to Claim 1, **characterized in that** the guide rail (3) can be driven by a motor (16).

3. Sliding door according to Claim 1 or 2, **characterized in that** one or both pins (8, 9) have openings (29, 30) for the passage of the line (32).

4. Sliding door according to one of the preceding claims, **characterized in that** the hinge bracket (5) has a clearance (31) for receiving the line (32).

5. Sliding door according to one of Claims 2 to 4, **characterized in that** a pinion (18) can be driven by the motor (16).

6. Sliding door according to Claim 5, **characterized in that** the pinion (18) engages in a rack (19) provided on the sliding door (1).

7. Sliding door according to Claim 5 or 6, **characterized in that** the pinion (18) engages in a further pinion (20) which engages in a further rack (21).

8. Sliding door according to one of the preceding claims, **characterized by** a motor (10) for driving the hinge bracket (5).

9. Sliding door according to Claim 8, **characterized in that** a pinion (13) can be driven by the motor (10).

10. Sliding door according to Claim 9, **characterized in that** the pinion engages in a pinion (14) provided on the pivoting arm (5).

11. Sliding door according to one of the preceding claims, **characterized in that** the sliding door (1) can be locked on the vehicle at the end facing away from the hinge bracket (5).

12. Vehicle, in particular a motor vehicle, **characterized by** a sliding door (1) according to one of Claims 1 to 11.

## Revendications

1. Porte coulissante pour un véhicule à moteur, qui présente à son côté intérieur un rail de guidage (3) qui est logé d'une manière déplaçable longitudinalement dans un chariot coulissant (4),
où est logé au véhicule un étrier à charnière (5) d'une manière pivotante autour d'un axe (8), et l'étrier à charnière (5) est logé au chariot coulissant (4) d'une manière pivotante autour d'un deuxième axe (9),
**caractérisé en ce que**
les axes (8, 9) sont creux (27, 28) pour la réception
d'une conduite menant à la portion coulissante (32).

2. Porte coulissante selon la revendication 1, **caractérisée en ce que** le rail de guidage (3) peut être entraîné par un moteur (16).

3. Porte coulissante selon la revendication 1 ou 2, **caractérisée en ce qu'**un ou les deux axes (8, 9) présentent des ouvertures (29, 30) pour le passage de la conduite (32).

4. Porte coulissante selon l'une des revendications précédentes, **caractérisée en ce que** l'étrier à charnière (5) présente un dégagement (31) pour la réception de la conduite (32).

5. Porte coulissante selon l'une des revendications 2 à 4, **caractérisée en ce qu'**une roue dentée (18) peut être entraînée par le moteur (16).

6. Porte coulissante selon la revendication 5, **caractérisée en ce que** la roue dentée (18) s'engage dans une crémaillère (19) prévue à la porte coulissante (1).

7. Porte coulissante selon la revendication 5 ou 6, **caractérisée en ce que** la roue dentée (18) engrène avec une autre roue dentée (20) qui engrène avec une autre crémaillère (21).

8. Porte coulissante selon l'une des revendications précédentes, **caractérisée par** un moteur (10) pour l'entraînement de l'étrier à charnière (5).

9. Porte coulissante selon la revendication 8, **caractérisée en ce qu'**une roue dentée (13) peut être entraînée par le moteur (10).

10. Porte coulissante selon la revendication 9, **caractérisée en ce que** la roue dentée engrène avec une roue dentée (14) prévue au bras pivotant (5).

11. Porte coulissante selon l'une des revendications précédentes, **caractérisée en ce que** la porte coulissante (1) peut être arrêtée à l'extrémité éloignée de l'étrier à charnière (5) au véhicule.

12. Véhicule, en particulier véhicule à moteur, **caractérisé par** une porte coulissante (1) selon l'une des revendications 1 à 11.
